# EUROPÄISCHE PATENTSCHRIFT

(11) **EP 0 718 063 B1**
(45) Veröffentlichungstag und Bekanntmachung des Hinweises auf die Patenterteilung: **11.04.2001**
(21) Anmeldenummer: 95119687.2
(22) Anmeldetag: 14.12.1995
(51) Int. Cl.: B23C 3/06, B23Q 1/54, B23Q 1/62

(54) **Bearbeitungsmaschine**
Machine tool
Machine d'usinage

(30) Priorität: 22.12.1994 DE 4445833
(43) Veröffentlichungstag der Anmeldung: 26.06.1996
(73) Patentinhaber: Gebr. Heller Maschinenfabrik GmbH, D-72622 Nürtingen (DE)
(72) Erfinder:
(74) Vertreter: Kohl, Karl-Heinz

(56) Entgegenhaltungen:
- EP-A- 0 018 000
- EP-A- 0 097 271
- FR-A- 1 403 313
- US-A- 5 028 180

## Beschreibung

Die Erfindung betrifft eine Bearbeitungsmaschine nach dem Oberbegriff der Ansprüche 1 bzw. 11 bzw. 13 bzw. 16 bzw. 19.

Bei bekannten Bearbeitungsmaschinen ist der Träger ein Vertikalschlitten eines Kreuzschlittens. Der Werkzeugträger ist ringförmig ausgebildet und um seine Achse drehbar am Vertikalschlitten gelagert. Um beispielsweise einen Hubzapfen einer Kurbelwelle zu bearbeiten, wird sie drehend angetrieben. Um das Werkzeug um den Hubzapfen herum zu bewegen, müssen die Bewegungen des Quer- und des Vertikalschlittens des Kreuzschlittens mittels einer mechanischen Kreisbahnsteuerung koordiniert werden. Die Bearbeitungsmaschine ist konstruktiv sehr aufwendig ausgebildet und dementsprechend auch teuer in der Herstellung. Für die einzelnen Schlitten des Kreuzschlittens sind Führungen notwendig. Zudem ist die Steuerung des Kreuzschlittens aufwendig.

Bei der gattungsgemäßen Bearbeitungsmaschine (US-A 5 028 180) ist der Träger für den Werkzeugträger über Teleskopbeine kugelgelenkig mit dem Ständer verbunden. Durch Ein- und Ausfahren der Teleskopbeine kann der Träger zusammen mit dem Werkstückträger im Raum bewegt werden. Bei dieser Bearbeitungsmaschine kann das Werkzeug in drei linearen und drei rotatorischen Richtungen in bezug auf das Werkstück bewegt werden. Da jede einzelne Achse dieser 6-Achsen-Maschine jeweils eine Führung, einen Antrieb und eine Steuerung benötigt, hat sie einen konstruktiv aufwendigen Aufbau.

Der Erfindung liegt die Aufgabe zugrunde, die gattungsgemäße Bearbeitungsmaschine so auszubilden, daß mit ihr Werkstücke unterschiedlichster Gestaltung bei konstruktiv einfacher Ausbildung bearbeitet werden können.

Diese Aufgabe wird bei der gattungsgemäßen Bearbeitungsmaschine erfindungsgemäß mit den kennzeichnenden Merkmalen der Ansprüche 1 bzw. 11 bzw. 13 bzw. 16 bzw. 19 gelöst.

Bei der erfindungsgemäßen Bearbeitungsmaschine nach Anspruch 1 wird der Träger mit dem Stellantrieb in jede gewünschte Lage während der Bearbeitung des Werkstückes gebracht. Der Werkzeugträger wird um seine Achse drehbar angetrieben. Im einfachsten Fall wird der Träger durch den Stellantrieb so bewegt, daß seine Achse eine Umlaufbewegung ausführt. Der Stellantrieb kann aber auch so gesteuert werden, daß der Träger jede gewünschte Bahnbewegung ausführen kann. So können ohne weiteres Planflächen, beliebig gekrümmte Flächen und dergleichen am Werkstück bearbeitet werden. Über den Stellantrieb wird der Träger in einer senkrecht zu den Schwenkachsen des Stellantriebes liegenden Ebene bezüglich des Ständers bewegt. Aufgrund dieser Ausbildung hat die Bearbeitungsmaschine eine konstruktiv einfache Gestaltung und benötigt keine aufwendige Steuerung. Die Bearbeitungsmaschine kann darum auch kostengünstig hergestellt werden. Infolge der erfindungsgemäßen Ausbildung kann sie vielseitig eingesetzt werden, so beispielsweise als Innen- oder als Außenfräsmaschine oder beispielsweise als Drehräumbearbeitungsmaschine.

Die Bearbeitungsmaschine gemäß Anspruch 11 zeichnet sich durch ihre besondere konstruktive Einfachheit aus. Mit dem Stellantrieb kann der Träger in einer senkrecht zur Schwenkachse des Stellantriebes liegenden Ebene bewegt werden, um das entsprechende Werkstück zu bearbeiten. Der Träger kann hierbei mit dem Stellantrieb sowohl geschwenkt als auch verschoben werden, so daß der Träger und damit das entsprechende Werkzeug auf jeder gewünschten Bahn bewegt werden kann.

Bei der Bearbeitungsmaschine nach Anspruch 13 ergibt sich eine besonders vorteilhafte Führung des Trägers in einer Gestellebene.

Auch bei einer Ausbildung entsprechend Anspruch 16 läßt sich der Träger auf jeder gewünschten Bahn bewegen. Durch Drehen der Gewindespindel wird das Gelenkteil entsprechend der Drehrichtung der Gewindespindel verschoben und damit der Träger in gewünschtem Maße gedreht.

Bei einer Ausbildung der Bearbeitungsmaschine entsprechend Anspruch 19 ergibt sich eine Minimierung der zu bewegenden Massen. Durch Drehen der Spindel wird das Führungselement in der erforderlichen Richtung verschoben. Der gelenkig mit dem Führungselement verbundene Träger wird entsprechend gedreht.

Weitere Merkmale der Erfindung ergeben sich aus den weiteren Ansprüchen, der Beschreibung und den Zeichnungen.

Die Erfindung wird anhand zweier in den Zeichnungen dargestellter Ausführungsbeispiele näher beschrieben. Es zeigen
- Fig. 1: in schematischer Darstellung und in Ansicht eine erfindungsgemäße Bearbeitungsmaschine,
- Fig. 2: teilweise im Schnitt und teilweise in Seitenansicht die Bearbeitungsmaschine gemäß Fig. 1,
- Fig. 3: in einer Darstellung entsprechend Fig. 2 eine zweite Ausführungsform einer erfindungsgemäßen Bearbeitungsmaschine,
- Fig. 4 bis Fig. 8: in Darstellungen entsprechend Fig. 1 weitere Ausführungsformen von erfindungsgemäßen Bearbeitungsmaschinen,
- Fig. 9: in vergrößerter Darstellung ein Kreuzgelenk der Bearbeitungsmaschine gemäß Fig. 7,
- Fig. 10: in einer Darstellung entsprechend Fig. 1 eine weitere Ausführungsform einer erfindungsgemäßen Bearbeitungsmaschine,
- Fig. 11: in schematischer Darstellung eine Draufsicht auf die Bearbeitungsmaschine gemäß Fig. 10.

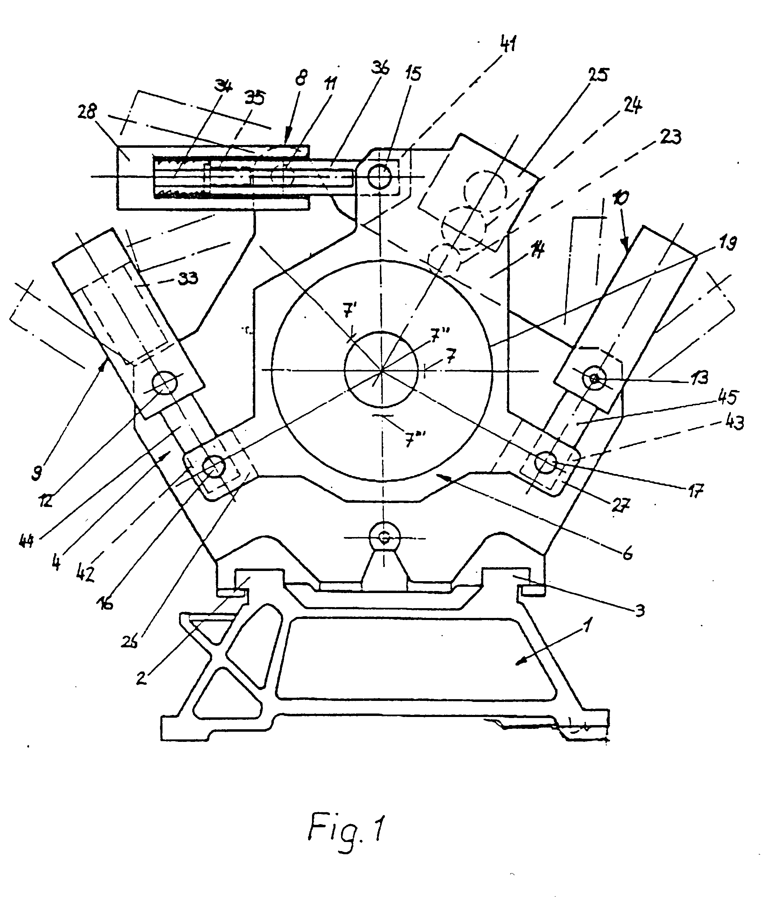

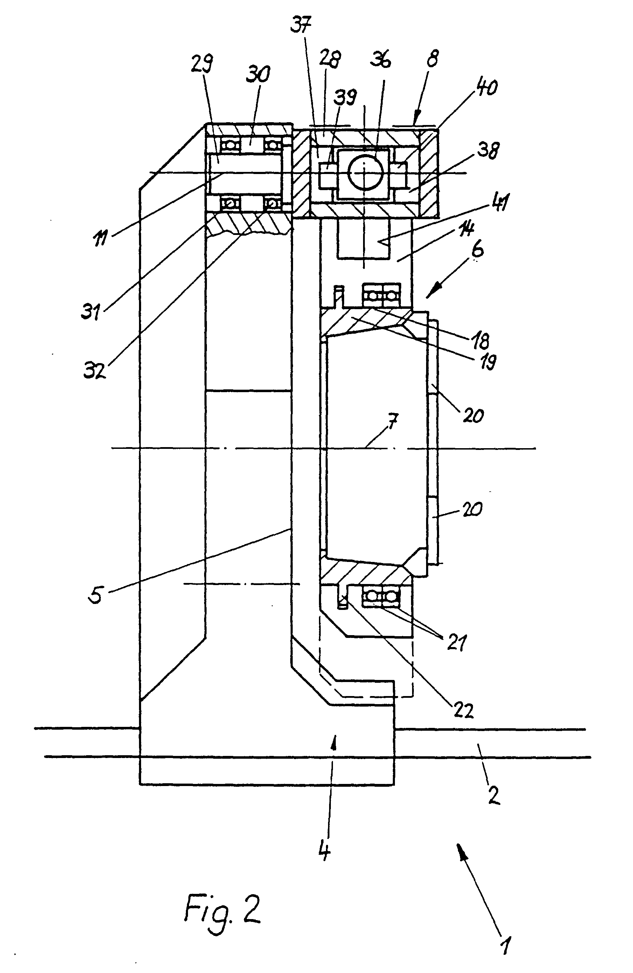

Die Bearbeitungsmaschine gemäß den Fig. 1 und 2 ist eine Innenfräsmaschine. Sie kann aber auch als Außenfräsmaschine, als Drehräummaschine und dergleichen ausgebildet sein.

Die Bearbeitungsmaschine hat ein Maschinenbett 1, das zwei mit Abstand voneinander liegende, parallele Führungen 2 und 3 aufweist. Auf ihnen ist ein Ständer 4 verfahrbar gelagert. An seiner einen Stirnseite 5 ist eine Bearbeitungseinheit 6 gelagert, die um eine senkrecht zu den Führungen 2, 3 liegende horizontale Achse 7 umlaufend antreibbar ist. Für die Umlaufbewegung sind drei jeweils gleich ausgebildete Antriebe 8 bis 10 vorgesehen, die am Ständer 4 um parallel zu den Führungen 2, 3 liegende horizontale Achsen 11 bis 13 schwenkbar gelagert sind. Außerdem sind die Antriebe 8 bis 10 an einem Träger 14 der Bearbeitungseinheit 6 angelenkt. Die Anlenkachsen 15 bis 17 liegen parallel zu den Schwenkachsen 11 bis 13.

Der Träger 14 hat eine zentrale Durchgangsöffnung 18 (Fig. 2), in der ein Werkzeugträger 19 um die Achse 7 drehbar gelagert ist. Der Werkzeugträger 19 ist längs seines Umfanges mit Schneidelementen 20 (Fig. 2) versehen. Zur drehbaren Lagerung des Werkzeugträgers 19 sind im Träger 14 entsprechende Lager 21 untergebracht. Der Werkzeugträger 19 weist eine Außenverzahnung 22 (Fig. 2) auf, in die ein Zahnrad 23 eines Zahnradgetriebes 24 eingreift. Es ist Bestandteil eines Drehantriebes 25, der am Träger 14 der Bearbeitungseinheit 6 angeordnet ist.

Der Träger 14 hat zwei abstehende Arme 26 und 27, an denen die Antriebe 9 und 10 angelenkt sind. Die Arme 26 und 27 sind in einem Winkelabstand von etwa 120° vorgesehen.

Da die Antriebe 8 bis 10 gleich ausgebildet sind, wird im folgenden die konstruktive Ausbildung des Antriebes 8 näher erläutert. Er hat ein Gehäuse 28, von dem ein Lagerzapfen 29 in Richtung auf den Ständer 4 absteht. Er hat eine Lageraufnahme 30, in die der Lagerzapfen 29 ragt, der mittels Lagern 31 und 32 in der Lageraufnahme drehbar gelagert ist. Die Achse des Lagerzapfens 29 bildet die Schwenkachse 11 des Antriebes 8.

Im Gehäuse 28 ist ein Elektromotor 33 untergebracht, der eine Gewindespindel 34 drehbar antreibt. Auf ihr sitzt drehfest eine Spindelmutter 35, die fest mit einem Stellschieber 36 verbunden ist, der aus dem Gehäuse 28 ragt und dessen freies Ende am Träger 14 angelenkt ist (Schwenkachse 15). Im Gehäuse 28 sind einander gegenüberliegend zwei Führungen 37 und 38 vorgesehen, die sich in Verschieberichtung des Stellschiebers 36 erstrecken. Er hat Führungsstege 39 und 40, mit denen der Stellschieber 36 in den Führungen 37, 38 geführt ist. Sie werden durch U- oder C-Schienen gebildet, die an einander gegenüberliegenden Innenseiten des Gehäuses 28 angeordnet sind.

Der Stellschieber 36 hat im dargestellten Ausführungsbeispiel rechteckigen Querschnitt. Es ist möglich, den Stellschieber 36 abweichend vom dargestellten Ausführungsbeispiel an sämtlichen vier Seiten zu führen. Die Führungsstege 39, 40 sind vorteilhaft einstückig mit dem Stellschieber 36 ausgebildet, können aber auch an den Seiten des Stellschiebers 36 vorzugsweise lösbar befestigt sein.

Der Stellschieber 36 kann auch runden Querschnitt aufweisen. Das freie Ende des Stellschiebers 36 ragt in eine randoffene Ausnehmung 41 des Trägers 14. Auch die Arme 26, 27 des Trägers 14 sind mit Ausnehmungen 42 und 43 versehen, in denen die freien Enden der Stellschieber 44 und 45 der Antriebe 9 und 10 schwenkbar gelagert sind.

Sämtliche Antriebe 8 bis 10 sind an eine (nicht dargestellte) Programmsteuerung angeschlossen. Mit ihr werden die Antriebe 8 bis 10 so gesteuert, daß der Träger 14 mit dem auf ihm gelagerten Werkzeugträger 19 in eine zum Innenfräsen erforderliche Umlaufbewegung versetzt wird. Während der Umlaufbewegung des Trägers 14 wird der Werkzeugträger 19 mittels des Drehantriebes 25 um die Achse 7 drehbar angetrieben.

Die Umlaufbewegung des Trägers 14 ist in Fig. 1 dadurch angedeutet, daß die Lage der Achse 7 in ihren verschiedenen Lagen während der Umlaufbewegung dargestellt ist (Lagen 7' bis 7''').

Da die einzelnen Antriebe 8 bis 10 unabhängig voneinander gesteuert werden, kann der Träger 14 nicht nur auf einer Kreisbahn umlaufend bewegt werden, sondern auf jeder anderen Bahn gesteuert bewegt werden. So können mit der Bearbeitungsmaschine beispielsweise auch Planflächen an Werkstücken bearbeitet werden, die winklig zueinander liegen.

Zur schwenkbaren Lagerung der Antriebe 8 bis 10 kann der Ständer 4 auch von seiner Stirnseite 5 abstehende Lagerzapfen aufweisen, auf denen die Gehäuse 28 der Antriebe 8 bis 10 schwenkbar gelagert sind.

Es ist ferner möglich, das Gehäuse 28 der Antriebe 8 bis 10 über die Schwenkachsen 15 bis 17 mit dem Träger 14 zu verbinden. Die freien Enden der Stellschieber 36 sind in diesem Fall über die Achsen 11 bis 13 an den Ständer 4 angelenkt. Auch dann kann durch die beschriebene Relativverschiebung zwischen dem Stellschieber 36 und dem Gehäuse 28 die Umlaufbewegung des Trägers 14 erzeugt werden.

Über die Führungen 2, 3 kann der Ständer 4 in Achsrichtung des zu bearbeitenden Werkstückes verstellt werden. Diese Verstellung kann über die Programmsteuerung erfolgen, über die auch die Antriebe 8 bis 10 gesteuert werden. Dadurch ist eine genaue Abstimmung der Verfahrbewegung des Ständers 4 und der Bewegung des Trägers 14 sichergestellt. Vorteilhaft ist auch der Drehantrieb 25 für den Werkzeugträger 19 an die Programmsteuerung angeschlossen, so daß eine optimale Bearbeitung des Werkstückes innerhalb kürzester Zeit möglich ist.

Die Antriebe 8 bis 10 können auch als Kolben-Zylinder-Einheiten ausgebildet sein, die hydraulisch oder pneumatisch betrieben werden. Auch können elektrische Stellantriebe eingesetzt werden. Allen diesen Antrieben ist gemeinsam, daß sie einen verschiebbaren Antriebsteil haben, der am Träger 14 angelenkt ist und mit dem der Träger so gesteuert bewegt werden kann, daß seine Achse 7 in der beschriebenen Weise die Umlaufbewegung oder jede andere erforderliche Bewegung ausführt.

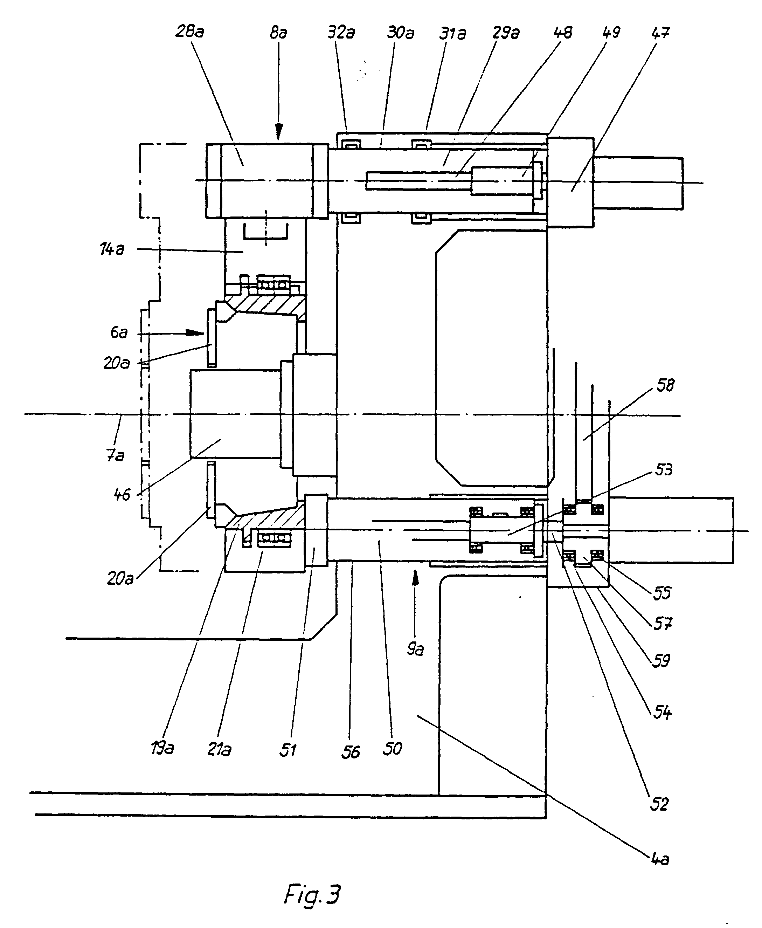

Bei der Ausführungsform gemäß Fig. 3 ist der Ständer 4a nicht verfahrbar. Vielmehr kann der Träger 14a der Bearbeitungseinheit 6a gegenüber dem Ständer 4a verschoben werden. Dadurch kann das Werkstück 46, das in bekannter Weise eingespannt ist, über seine Länge mit den Schneidelementen 20a bearbeitet werden, die am Umfang des Werkzeugträgers 19a vorgesehen sind. Er ist über die Lager 21a drehbar im Träger 14 gelagert, wie dies anhand der Fig. 1 und 2 erläutert worden ist.

Der Träger 14a wird entsprechend der vorigen Ausführungsform mit den Antrieben gesteuert bewegt, von denen der Antrieb 8a mit dem Gehäuse 28a dargestellt ist. Der am Gehäuse 28a vorgesehene Lagerzapfen 29a ist als Kolbenstange ausgebildet, die in der Lageraufnahme 30a des Ständers 4a verschiebbar und mittels der Lager 31a, 32a drehbar ist. Zum Axialverschieben des Lagerzapfens 29a dient ein Verschiebeantrieb 47, der beispielsweise ein Elektromotor ist. Er hat eine Gewindespindel 48, auf der eine Spindelmutter 49 sitzt. Sie ist axial fest mit dem Lagerzapfen 29a verbunden, in den die Gewindespindel 48 ragt und der gegenüber der Spindelmutter 49 drehbar ist. Über den Spindeltrieb 48, 49 läßt sich der Lagerzapfen 29a mit dem Antrieb 8a und der Bearbeitungseinheit 6a im gewünschten Maß verschieben.

Der Verschiebeantrieb 47 ist an der von der Bearbeitungseinheit 6a abgewandten Seite des Ständers 4a befestigt.

Auf die beschriebene Weise sind die Lagerzapfen der Gehäuse der beiden anderen Antriebe im Ständer 4a gelagert. In Fig. 3 ist der Lagerzapfen 50 des Antriebes 9a dargestellt, der von dem Gehäuse 51 absteht, in dem der Stellschieber in der anhand der Fig. 1 und 2 beschriebenen Weise verschiebbar gelagert ist. In den Lagerzapfen 50 ragt eine Gewindespindel 52, auf der eine Spindelmutter 53 sitzt. Sie ragt ebenso wie die Spindelmutter 49 in den Lagerzapfen 50, der axial fest mit ihr verbunden ist, jedoch mittels Lagern 54 und 55 ihr gegenüber drehbar ist. In gleicher Weise ist auch der Lagerzapfen 29a drehbar mit der Spindelmutter 49 verbunden.

Auf dem aus der Lageraufnahme 50 des Ständers 4a ragenden Ende der Gewindespindel 52 sitzt drehfest ein Zahnrad 57, das über einen in Fig. 3 nur angedeuteten Zahnriementrieb 58 mit der Gewindespindel 48 antriebsverbunden ist. Der Zahnriementrieb 58 liegt auf der der Bearbeitungseinheit 6a gegenüberliegenden Seite des Ständers 4a und ist in einem Gehäuse 59 geschützt untergebracht. Auch der Lagerzapfen des dritten Antriebes ist in gleicher Weise ausgebildet und gelagert. Seine Verschiebebewegung wird in gleicher Weise wie beim Lagerzapfen 50 vom Verschiebeantrieb 47 abgeleitet, so daß weitere Verschiebeantriebe nicht erforderlich sind.

Anstelle eines Riementriebes können beispielsweise auch Zahnradgetriebe verwendet werden. Es ist ferner möglich, die Lagerzapfen der drei Antriebe einzeln programmgesteuert zu verschieben. Anstelle des Spindeltriebes, der auch eine andere Ausbildung haben kann, können auch sonstige geeignete Verschiebeantriebe eingesetzt werden, beispielsweise in Form von Kolben-Zylinder-Einheiten. Der Lagerzapfen 29a, 50 bildet in einem solchen Fall die Kolbenstange, die hydraulisch oder pneumatisch axial verschoben werden kann.

Die Antriebe 8a, 9a sind im übrigen gleich ausgebildet wie bei der vorigen Ausführungsform. Der Träger 14a wird, wie anhand der Fig. 1 und 2 beschrieben worden ist, mittels der Antriebe gesteuert bewegt, wobei der Werkzeugträger 19a um die Achse 7a drehbar angetrieben wird.

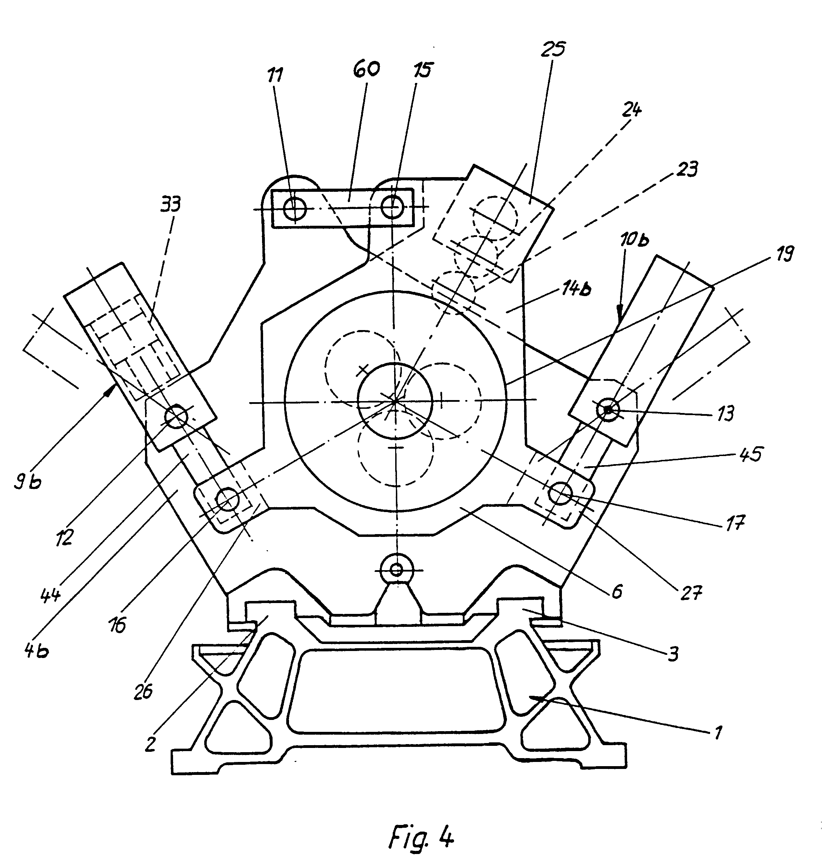

Bei einer weiteren Ausführungsform (Fig. 4) werden zur Bewegung des Trägers 14b nur zwei Antriebe 9b, 10b eingesetzt. Der dritte Antrieb, beispielsweise der Antrieb 8b wird durch eine Gelenkverbindung 60, beispielsweise eine Lasche ersetzt, die über die Achsen 11 und 15 am Ständer 4b und am Träger 14b angelenkt ist. Der Abstand der beiden Achsen 11 und 15 voneinander bleibt somit bei der Verstellung des Trägers 14b mittels der beiden anderen Antriebe 9b, 10b unverändert.

Im übrigen ist das Ausführungsbeispiel nach Fig. 4 gleich ausgebildet wie die Ausführungsform nach Fig. 1. Der Ständer 4b kann über die Führungen 2, 3 in Achsrichtung des zu bearbeitenden Werkstückes verstellt werden. Über die beiden Antriebe 9b, 10b wird der Träger 14b mit dem auf ihm gelagerten Werkzeugträger 19 in eine Umlaufbewegung versetzt. Hierbei wird der Werkzeugträger 19 mittels des Drehantriebes 25 um seine Achse drehbar angetrieben. Für die Antriebe 9b, 10b sind mit strichpunktierten Linien entsprechende Schwenkstellungen gekennzeichnet, wenn die Antriebe 9b, 10b bei der Umlaufbewegung des Trägers 14b um ihre Achsen 12, 13 schwenken.

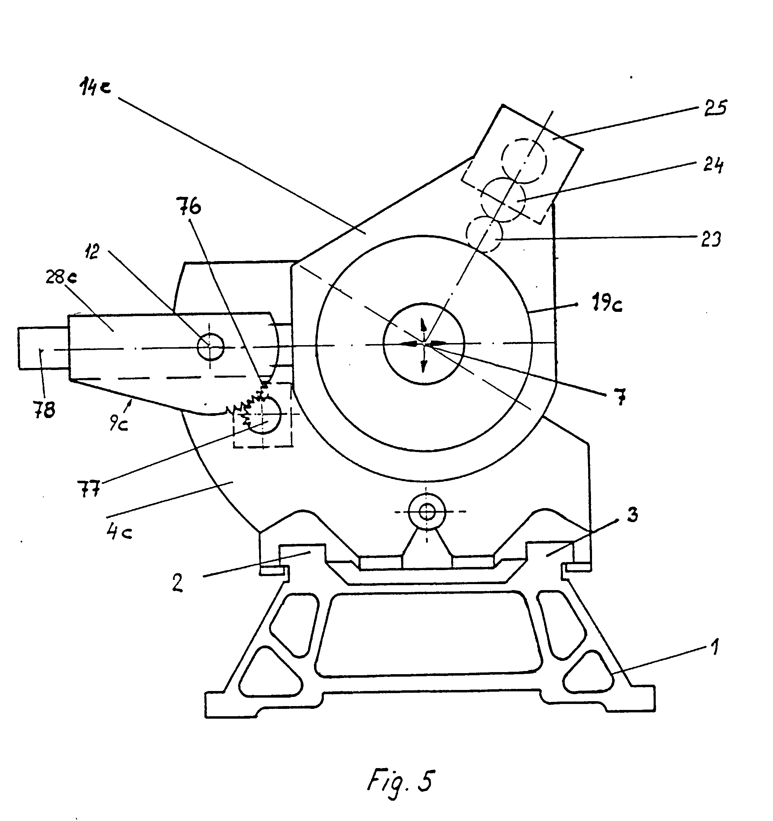

Die Bearbeitungsmaschine nach Fig. 5 hat das Maschinenbett 1 mit den Führungen 2 und 3, auf denen der Ständer 4c verschiebbar ist. Am Ständer 4c ist der Träger 14c verstellbar gelagert, der den Werkzeugträger 19c trägt, der mittels des Drehantriebes 25 und des Zahnradgetriebes 24 um seine Achse drehbar angetrieben wird.

Der Ständer 4d trägt eine Längsführung, mit der das Gehäuse 28c mittels eines Antriebs 78 in Horizontalrichtung längs des Ständers 4c verschoben werden kann. Das Gehäuse 28c weist eine Drehachse 12 auf, um die der Träger 14c mittels einer mit ihm fest verbundenen Verzahnung 76 und eines Ritzels 77 geschwenkt werden kann. Das Ritzel 77 ist Teil eines nicht dargestellten Schwenkantriebes 9c, der mit dem Gehäuse 28c fest verbunden ist.

Zum Bearbeitung eines Werkstückes wird der Werkzeugträger 19c um seine Achse drehbar angetrieben. Je nach der zu bearbeitenden Werkstückfläche wird außerdem der Träger 14c geschwenkt und/oder verschoben. Zum Verschwenken wird der Träger 14c um die Achse 12 geschwenkt. Gleichzeitig kann das Gehäuse 28c mit dem Antrieb 9c und dem Träger 14c in jeder Schwenklage verschoben werden. Auf diese Weise kann die Drehachse 7, wie in Fig. 5 durch die Pfeile angedeutet, auf jeder gewünschten Bahn bewegt werden. Dadurch kann die Achse 7 auf einer umlaufenden Bahn, aber auch in nicht umlaufenden Bahnen bewegt werden.

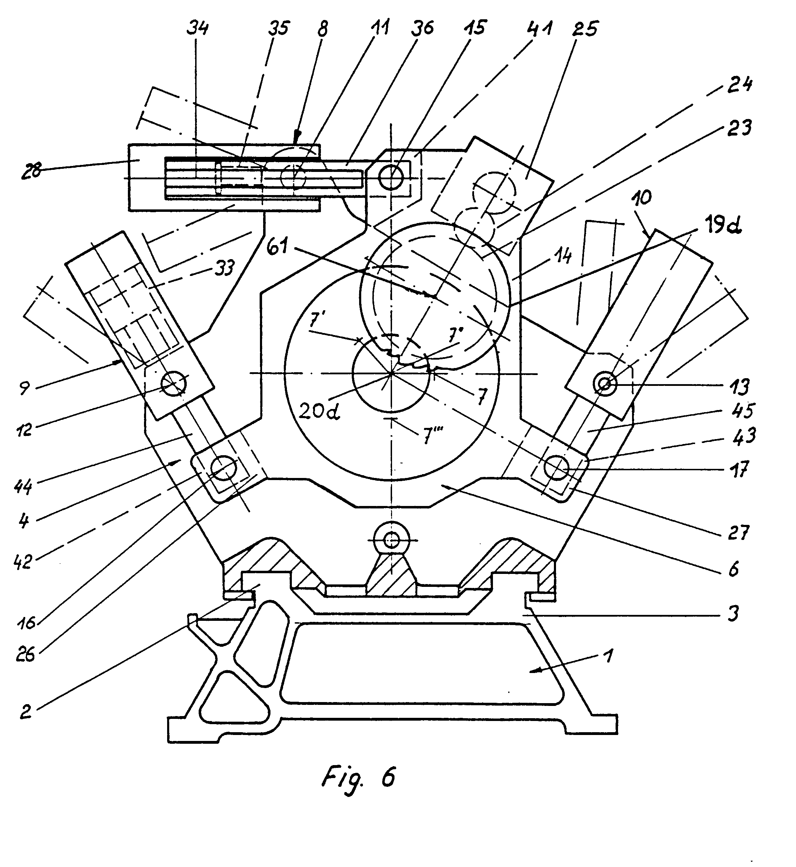

Die Bearbeitungsmaschine nach Fig. 6 ist im wesentlichen gleich ausgebildet wie die Ausführungsform nach Fig. 1. Der Träger 14 kann mit den Antrieben 8 bis 10 umlaufend bewegt werden. Hierbei schwenken die Antriebe 8 bis 10 um ihre jeweiligen Achsen 11 bis 13. Außerdem schwenken die Stellschieber 36, 44, 45 der Antriebe 8 bis 10 um die Achsen 15 bis 17.

Am Träger 14 ist außermittig der Werkzeugträger 19d um die Achse 61 drehbar gelagert. Der Drehantrieb 25 ist wiederum über ein Zahnradgetriebe 24 mit einem am Werkzeugträger 19d vorgesehenen Zahnrad 23 antriebsverbunden. Das Zahnrad 23 liegt koaxial zur Drehachse 61 des Werkzeugträgers 19d. Der Werkzeugträger 19d hat die Schneidelemente 20d, die am Außenumfang des Werkzeugträgers vorgesehen sind. Mit dem Werkzeugträger 19d ist ein Außenfräsen des Werkstückes möglich. Durch entsprechende Ansteuerung der Antriebe 8 bis 10 kann der Träger 14 in der beschriebenen Weise umlaufend bewegt werden. Die verschiedenen Stellungen der Drehachse bei dieser Umlaufbewegung sind mit den Bezugszeichen 7' bis 7''' gekennzeichnet. Bei dieser Umlaufbewegung des Trägers 14 wird der Werkzeugträger 19d um seine Achse 61 drehbar angetrieben. Wie bei den vorigen Ausführungsbeispielen kann der Träger 14 auf jeder geeigneten Bahn gesteuert bewegt werden, so daß nicht nur Zylinderflächen an Werkstücken, sondern beispielsweise auch Planflächen bearbeitet werden können.

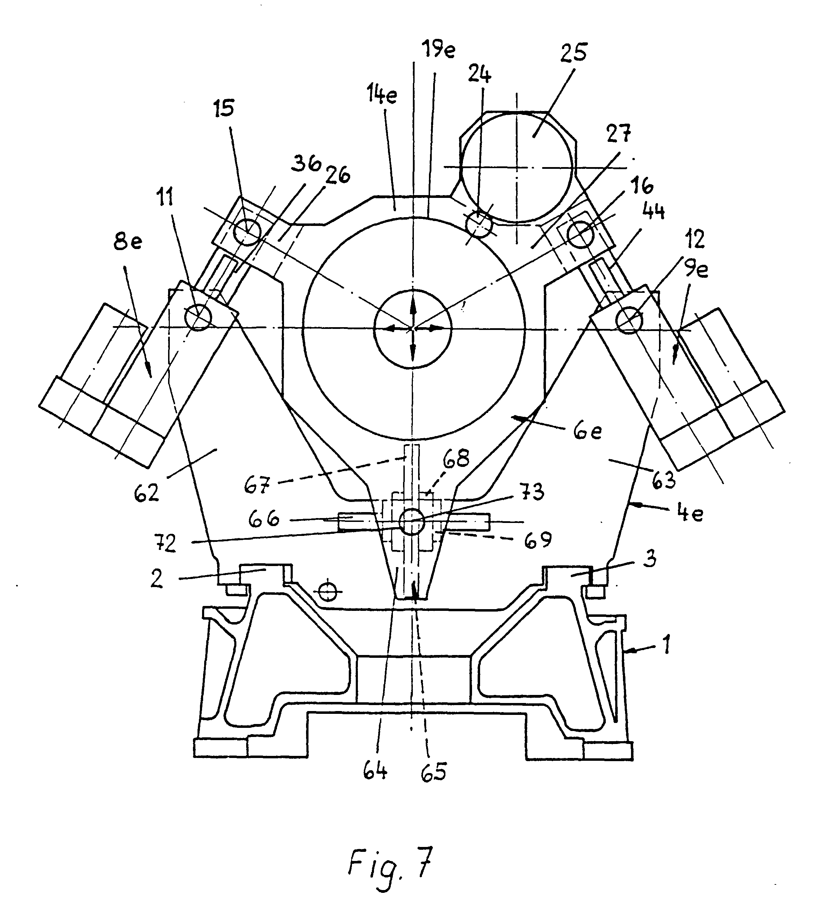

Die Maschine nach Fig. 7 hat das Maschinenbett 1 mit den beiden Führungen 2, 3, längs derer der Ständer 4e verschoben werden kann. Er hat zwei winklig zueinander verlaufende Arme 62 und 63, die vom maschinenbettseitigen Teil des Ständers aus divergierend verlaufen. Am Ständer 4e ist die Bearbeitungseinheit 6e aufgehängt. An den freien Enden der Ständerarme 62, 63 sind die Antriebe 8e, 9e angelenkt, die um die zueinander parallelen Achsen 11, 12 schwenkbar sind. Die Antriebe 8e, 9e können gleich ausgebildet sein wie bei den zuvor beschriebenen Ausführungsbeispielen. Sie haben die Stellschieber 36 und 44, die an den nach außen ragenden Armen 26 und 27 des Trägers 14e der Bearbeitungseinheit 6e angelenkt sind. Die zugehörigen Schwenkachsen 15, 16 liegen parallel zu den Schwenkachsen 11, 12.

Der Träger 14e hat einen weiteren nach außen ragenden Arm 64, der über ein Kreuzgelenk 65 mit dem Ständer 4e nahe dem Maschinenbett 1 verbunden ist. Das Kreuzgelenk 65 hat zwei rechtwinklig zueinander liegende Achsen 66 und 67, die jeweils senkrecht zu den Schwenkachsen 11, 12, 15, 16 liegen. Längs der Achsen 66, 67 sind Gelenkteile 68 und 69 verschiebbar.

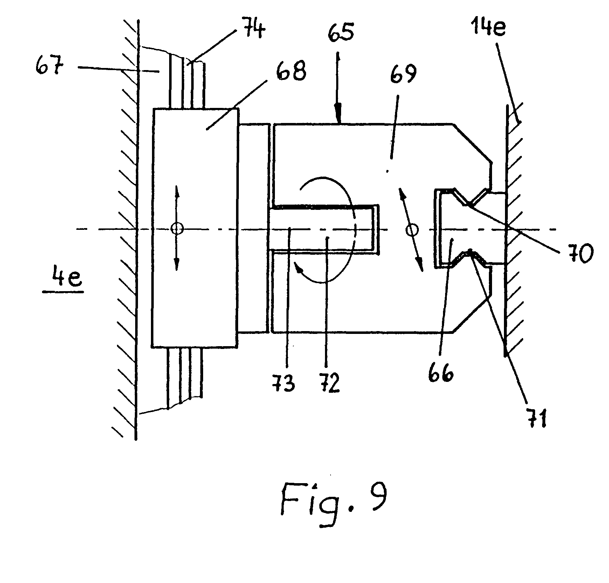

Wie Fig. 9 im einzelnen zeigt, wird die Achse 66 durch eine Leiste gebildet, die an der dem Ständer 4e zugewandten Seite des Trägers 14e vorgesehen ist. Die Achse 66 weist an einander gegenüberliegenden Seiten Nuten 70, 71 auf, die in Längsrichtung der Achse 66 verlaufen und in die der Gelenkteil 69 formschlüssig eingreift. Dadurch kann der Gelenkteil 69 längs der Achse 66 verschoben werden (Fig. 9).

Der Gelenkteil 69 sitzt drehbar auf einem Zapfen 72, dessen Achse 73 eine Schwenkachse des Trägers 14e bildet. Der Träger 14e weist somit wie das Ausführungsbeispiel nach Fig. 1 drei im Winkelabstand von jeweils etwa 120° zueinander liegende, zueinander parallele Schwenkachsen 15, 16, 73 auf.

Der Zapfen 72 steht vom Gelenkteil 68 ab, der längs der Achse 67 verschiebbar ist. Die Achse 73 wird ebenfalls durch eine Leiste gebildet, die an ihren einander gegenüberliegenden Längsseiten Nuten aufweist, von denen in Fig. 9 die eine Nut 74 dargestellt ist. Auf diese Weise kann der Träger 14e im Bereich der nahe dem Maschinenbett 1 liegenden Schwenkachse 73 längs der Achsen 66 und 67 in zwei zueinander rechtwinkligen Richtungen verschoben werden. Darüberhinaus kann der Gelenkteil 69 um die Achse 73 relativ zum Gelenkteil 68 drehen.

Die Achse 67 ist an der dem Träger 14e zugewandten Seite des Ständers 4e befestigt.

Auch bei dieser Bearbeitungsmaschine sind die einzelnen Antriebe 8e, 9e unabhängig voneinander steuerbar, so daß der Träger 14e auf jeder gewünschten Bahn umlaufend bewegt werden kann. Am Träger 14e ist der Werkzeugträger 19e gelagert, der in der beschriebenen Weise mittels des Drehantriebes 75 und des Zahnradgetriebes 24 drehbar angetrieben wird. Während der Bewegung des Trägers 14e wird der Werkzeugträger 19e in der beschriebenen Weise um seine Achse gedreht. Das Kreuzgelenk 65 stellt sicher, daß der Träger 14e und damit auch der Werkzeugträger 19e im gewünschten Maße gegenüber dem Ständer 4e bewegt werden kann, um das Werkstück zu bearbeiten.

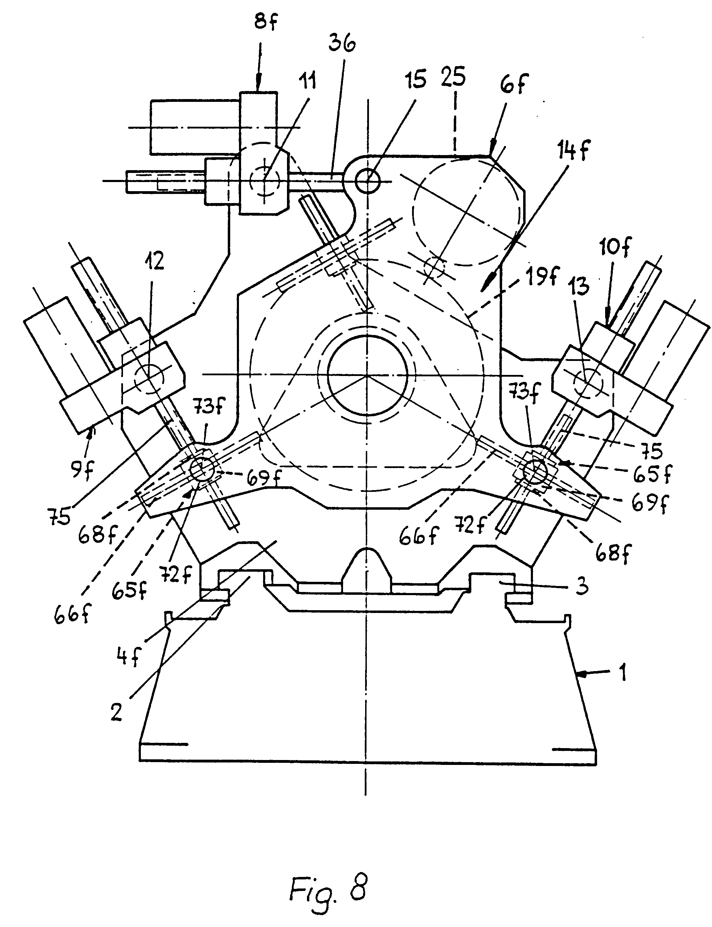

Bei der Ausführungsform gemäß Fig. 8 ist der Ständer 4f auf den Führungen 2, 3 des Maschinenbettes 1 verfahrbar. Am Ständer 4f sind die Antriebe 8f bis 10f in der beschriebenen Weise um die Achsen 11, 12, 13 schwenkbar gelagert. Der Antrieb 8f hat den Stellschieber 36, dessen freies Ende über die Achse 15 am Träger 14f der Bearbeitungseinheit 6f angelenkt ist. Der Stellschieber 36 ist in der anhand der Fig. 1 beschriebenen Weise über eine Gewindespindel und eine Spindelmutter vom Antrieb 8f aus antreibbar.

Die beiden anderen Antriebe 9f und 10f sind jeweils über ein Kreuzgelenk 65f mit dem Träger 14f gelenkig verbunden. Der eine Gelenkteil 68f ist als Spindelmutter ausgebildet, die auf einer Gewindespindel 75 des Antriebes 9f, 10f sitzt. Die Gewindespindel 75 wird drehbar angetrieben, wodurch der Gelenkteil 68f entsprechend der Drehrichtung der Gewindespindel verschoben wird. Der andere Gelenkteil 69f sitzt, wie dies anhand von Fig. 9 beschrieben worden ist, verschiebbar auf der Achse 66f und ist außerdem gegenüber dem Gelenkteil 68f über den Zapfen 72f drehbar gelagert. Die Achse 73f des jeweiligen Zapfens 72f liegt parallel zu den Schwenkachsen 11 bis 13.

Die Antriebe 8f bis 10f werden, wie bei den vorhergehenden Ausführungsformen, unabhängig voneinander gesteuert. Dadurch kann der Träger 14f auf jeder gewünschten Bahn bewegt werden. Gleichzeitig wird der Werkzeugträger 19f über den Drehantrieb 25 um seine Achse drehbar angetrieben. Die Kreuzgelenke 65f stellen sicher, daß der Träger 14f im gewünschten Maß verstellt werden kann. Die beiden Gelenkteile 68f, 69f der Kreuzgelenke 65f können in der beschriebenen Weise in zwei zueinander senkrechten Richtungen bewegt werden, wobei außerdem über die Zapfen 72f auch die Verdrehbarkeit der Gelenkteile 69f gegenüber den Gelenkteilen 68f sichergestellt ist.

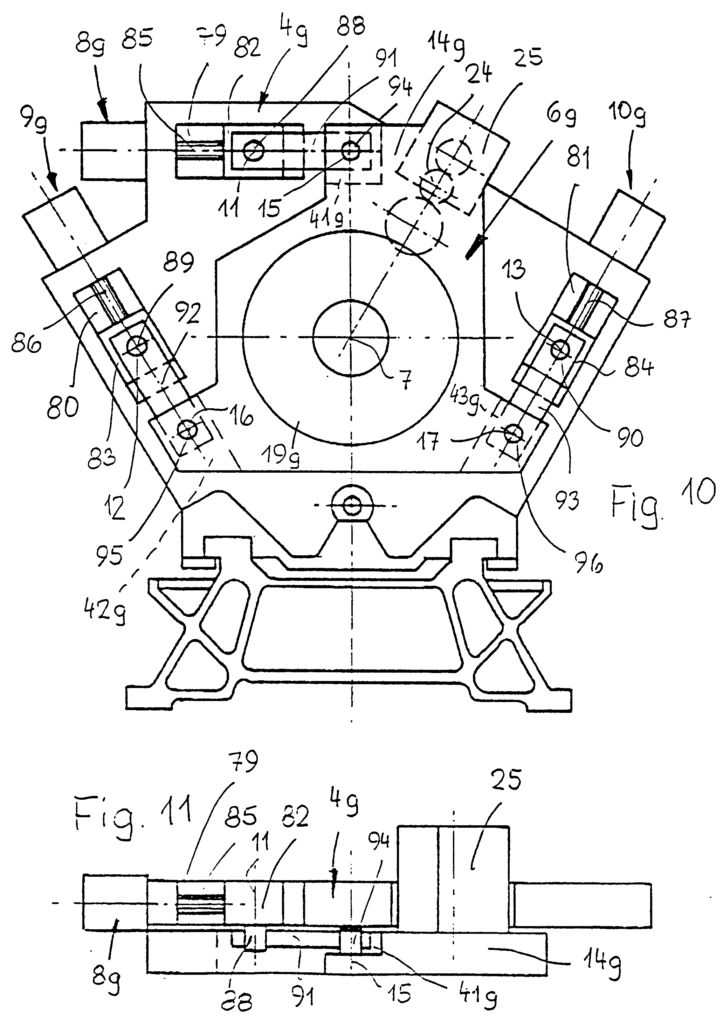

Die Fig. 10 und 11 zeigen eine besonders bevorzugte Ausführungsform einer Bearbeitungsmaschine. Der Ständer 4g hat drei im Winkelabstand zueinander liegende Führungsöffnungen 79 bis 81, in denen jeweils ein Führungselement 82 bis 84 verschiebbar geführt ist. Die Führungselemente 82 bis 84 sitzen jeweils auf einer Spindel 85 bis 87, die vorzugsweise eine Kugelrollspindel ist. Sie ist Teil jeweils eines Antriebes 8g bis 10g, der am Ständer 4g vorgesehen ist. Die Führungselemente 82 bis 84 sind unverdrehbar in den Führungsöffnungen 79 bis 81 geführt. Die Führungselemente 82 bis 84 liegen mit einander gegenüberliegenden Seiten an den in Verschieberichtung sich erstreckenden Innenseiten der Führungsöffnungen 79 bis 81 an. Vorzugsweise sind die Führungselemente 82 bis 84 gleich breit wie die Führungsöffnungen 79 bis 81, so daß sie seitlich nicht über diese ragen (Fig. 11).

Die Führungselemente 82 bis 84 tragen jeweils einen senkrecht zu ihrer Verschieberichtung sich erstreckenden Bolzen 88 bis 90. Die Achsen dieser Bolzen bilden die Schwenkachsen 11 bis 13 für jeweils eine Lasche 91 bis 93, die mit einem Ende schwenkbar auf den Bolzen 88 bis 90 sitzt. Die Laschen 91 bis 93 liegen auf der dem Träger 14g der Bearbeitungseinheit 6g zugewandten Seite des Ständers 4g (Fig. 11). Die anderen Enden der Laschen 91 bis 93 sitzen auf Bolzen 94 bis 96, deren Achsen die Schwenkachsen 15 bis 17 bilden. Sie liegen parallel zu den Schwenkachsen 11 bis 13 und parallel zur Drehachse 7 des Werkzeugträgers 19g. Die Bolzen 94 bis 96 stehen vom Träger 14g in Richtung auf den Ständer 4g ab. Wie Fig. 11 zeigt, liegen die Bolzen 94 bis 96 in randoffenen Ausnehmungen 41g bis 43g des Trägers 14g. Dadurch liegen die Bolzen geschützt im Bereich zwischen dem Träger 14g und dem Ständer 4g.

Am Träger 14g ist wiederum der Drehantrieb 25 befestigt, der über das Zahnradgetriebe 24 den Werkzeugträger 19g in der beschriebenen Weise drehbar antreibt.

Die Antriebe 8g bis 10g werden unabhängig voneinander gesteuert, so daß der Träger 14g in der beschriebenen Weise zur Bearbeitung des jeweiligen Werkstückes bewegt werden kann. Je nach Drehrichtung der Spindeln 85 bis 87 werden die Führungselemente 82 bis 84 innerhalb der Führungsöffnungen 79 bis 81 auf den Spindeln verstellt, wodurch der Träger 14g im erforderlichen Maße bewegt wird. Während der Bewegung des Trägers 14g wird der Werkzeugträger 19g über den Drehantrieb 25 drehbar angetrieben. Auch bei dieser Ausführungsform kann die Achse 7, wie dies anhand der vorigen Ausführungsbeispiele beschrieben worden ist, auf einer umlaufenden oder jeder anderen zur Bearbeitung des Werkstückes erforderlichen Bahn bewegt werden. Selbstverständlich ist es auch möglich, die Achse 7 längs einer Geraden zu bewegen, um Planflächen am Werkstück zu bearbeiten. Im übrigen ist die Bearbeitungsmaschine nach den Fig. 10 und 11 gleich ausgebildet wie die Ausführungsform gemäß Fig. 1.

Die Bearbeitungsmaschine nach den Fig. 10 und 11 kann auch nur zwei Antriebe wie die Bearbeitungsmaschine entsprechend Fig. 4 aufweisen. In diesem Fall ist der eine Antrieb durch eine Lasche ersetzt. Die Antriebe 8g bis 10g können auch jede andere geeignete Ausbildung haben, um die Führungselemente 82 bis 84 zum Verschwenken des Trägers 14g zu bewegen.

## Patentansprüche

1. Bearbeitungsmaschine mit einem Ständer (4, 4a, 4b, 4d), an dem ein Träger (14, 14a, 14b) verstellbar gelagert ist, der einen Schneidelemente aufweisenden Werkzeugträger (19, 19a) aufweist, der während der Verstellung des Trägers (14, 14a, 14b) um seine Achse drehbar angetrieben ist, an dem mindestens ein Stellantrieb (8 bis 10; 8a, 9a; 9b, 10b) angreift, der zur Erzeugung der Verstellbewegung des Trägers (14, 14a, 14b) an eine Steuerung angeschlossen ist, mit der der Stellantrieb (8 bis 10; 8a, 9a; 9b, 10b) antreibbar ist, der schwenkbar am Ständer (4, 4a, 4b, 4d) gelagert ist,
dadurch gekennzeichnet, daß der Stellantrieb (8 bis 10; 8a, 9a; 9b, 10b) am Ständer (4, 4a, 4b, 4d) und am Träger (14, 14a, 14b) um zueinander parallele Achsen (11 bis 13, 15 bis 17) schwenkbar gelagert ist, die sich in Achsrichtung des Werkzeugträgers (19, 19a) erstrecken (Fig. 1 bis 4 und 6).

2. Bearbeitungsmaschine nach Anspruch 1,
dadurch gekennzeichnet, daß am Träger (14b) zwei im Winkelabstand voneinander angeordnete Stellantriebe (9b, 10b) angreifen.

3. Bearbeitungsmaschine nach Anspruch 1,
dadurch gekennzeichnet, daß am Träger (14) drei im Winkelabstand voneinander angeordnete Stellantriebe (8 bis 10) angreifen.

4. Bearbeitungsmaschine nach Anspruch 2 oder 3,
dadurch gekennzeichnet, daß sämtliche Stellantriebe (8 bis 10; 8a, 9a; 9b, 10b) am Ständer (4, 4a, 4b, 4d) und am Träger (14, 14a, 14b, 14d) um zueinander parallele Achsen (11 bis 13, 15 bis 17) schwenkbar gelagert sind.

5. Bearbeitungsmaschine nach einem der Ansprüche 1 bis 4,
dadurch gekennzeichnet, daß die Stellantriebe (8 bis 10, 8a, 9a) jeweils einen Stellschieber (36) aufweisen, der in einem Gehäuse (28, 28a) verschiebbar gelagert und vorzugsweise mit seinem freien Ende am Träger (14, 14a) bzw. am Ständer (4, 4a) angelenkt ist.

6. Bearbeitungsmaschine nach Anspruch 5,
dadurch gekennzeichnet, daß der Stellschieber (36) durch einen Spindeltrieb (34, 35) verschiebbar ist.

7. Bearbeitungsmaschine nach einem der Ansprüche 1 bis 6,
dadurch gekennzeichnet, daß die Stellantriebe (8 bis 10; 8a, 9a) jeweils ein Gehäuse (28, 28a) haben, das am Ständer (4, 4a) bzw. am Träger (14, 14a) angelenkt ist und vorzugsweise einen quer abstehenden Lagerzapfen (29; 29a, 50) aufweist, der in einer Lageraufnahme (30; 30a, 56) des Ständers (4, 4a) bzw. des Trägers (14, 14a) drehbar gelagert ist.

8. Bearbeitungsmaschine nach Anspruch 7,
dadurch gekennzeichnet, daß der Lagerzapfen (29a, 50) in seiner Längsachse verschiebbar gelagert ist, und daß vorzugsweise die Verschiebebewegung sämtlicher Lagerzapfen (29a, 50) von einem gemeinsamen Verschiebeantrieb (47) abgeleitet ist.

9. Bearbeitungsmaschine nach Anspruch 8,
dadurch gekennzeichnet, daß der Verschiebeantrieb (47) über einen Spindeltrieb (48, 49) den Lagerzapfen (29a) des einen Stellantriebes (8a) axial verschiebbar antreibt, und daß vorteilhaft eine Gewindespindel (48) des Spindeltriebes (48, 49) über ein Getriebe (58), vorzugsweise einen Zahnriementrieb, mit Spindeltrieben (52, 53) der Lagerzapfen (50) der anderen Stellantriebe (9a) antriebsverbunden ist.

10. Bearbeitungsmaschine nach einem der Ansprüche 1 bis 9,
dadurch gekennzeichnet, daß der Werkzeugträger (19, 19a) durch einen Drehantrieb (25) antreibbar ist, der am Träger (14, 14a) angeordnet ist.

11. Bearbeitungsmaschine mit einem Ständer (4c), an dem ein Träger (14c) verstellbar gelagert ist, der einen Schneidelemente aufweisenden Werkzeugträger (19c) aufweist, der während der Verstellung des Trägers (14c) um seine Achse drehbar angetrieben ist, an dem mindestens ein Stellantrieb (9c) angreift, der zur Erzeugung der Verstellbewegung des Trägers (14c) an eine Steuerung angeschlossen ist, mit der der Stellantrieb (9c) antreibbar ist, der schwenkbar am Ständer (4c) gelagert ist,
dadurch gekennzeichnet, daß der Stellantrieb (9c) am Ständer (4c) verschiebbar gelagert ist, daß der Träger (14c) mit dem Stellantrieb (9c) in Verschieberichtung fest verbunden ist, und daß vorteilhaft der Stellantrieb (9c) zusammen mit dem Träger (14c) um eine in Achsrichtung des Werkzeugträgers (19c) sich erstreckende Achse (12) schwenkbar am Ständer (4c) gelagert ist (Fig. 5).

12. Bearbeitungsmaschine nach Anspruch 11,
dadurch gekennzeichnet, daß das Gehäuse (28c) des Stellantriebes (9c) mit einer Verzahnung (76) versehen ist, in die ein Zahnrad (77) eines Schwenkantriebes eingreift, der vorzugsweise zusammen mit dem Stellantrieb (9c) verschiebbar und verschwenkbar ist.

13. Bearbeitungsmaschine mit einem Ständer (4e), an dem ein Träger (14e) verstellbar gelagert ist, der einen Schneidelemente aufweisenden Werkzeugträger (19e) aufweist, der während der Verstellung des Trägers (14e) um seine Achse drehbar angetrieben ist, an dem mindestens ein Stellantrieb (8e, 9e) angreift, der zur Erzeugung der Verstellbewegung des Trägers (14e) an eine Steuerung angeschlossen ist, mit der der Stellantrieb (8e, 9e) antreibbar ist, der schwenkbar am Ständer (4e) gelagert ist,
dadurch gekennzeichnet, daß der Träger (14e) mit einem Kreuzgelenk (65) mit dem Ständer (4e) verbunden ist, das vorzugsweise zwei Gelenkteile (68, 69) aufweist, von denen der eine Gelenkteil (68) mit dem Ständer (4e) und der andere Gelenkteil (69) mit dem Träger (14e) verbunden ist (Fig. 7 und 9).

14. Bearbeitungsmaschine nach Anspruch 13,
dadurch gekennzeichnet, daß das Kreuzgelenk (65) in zwei winklig, vorzugsweise rechtwinklig, zueinander liegenden Richtungen verschiebbar ist, und daß vorzugsweise die beiden Gelenkteile (68, 69) gegeneinander drehbar sind.

15. Bearbeitungsmaschine nach Anspruch 14,
dadurch gekennzeichnet, daß die Drehachse (73) parallel zu den Schwenkachsen (11, 12; 15, 16) der Stellantriebe (8e, 9e) liegt, und daß vorzugsweise die Drehachse (73) und die Schwenkachsen (11, 12; 15, 16) in einem Winkelabstand von etwa 120° zueinander liegen.

16. Bearbeitungsmaschine mit einem Ständer (4f), an dem ein Träger (14f) verstellbar gelagert ist, der einen Schneidelemente aufweisenden Werkzeugträger (19f) aufweist, der während der Verstellung des Trägers (14f) um seine Achse drehbar angetrieben ist, an dem mindestens ein Stellantrieb (8f bis 10f) angreift, der zur Erzeugung der Verstellbewegung des Trägers (14f) an eine Steuerung angeschlossen ist, mit der der Stellantrieb (8f bis 10f) antreibbar ist, der schwenkbar am Ständer (4f) gelagert ist,
dadurch gekennzeichnet, daß der Stellantrieb (9f, 10f) mit einem Kreuzgelenk (65f) antriebsverbunden ist und eine Gewindespindel (75) hat, auf der ein als Spindelmutter ausgebildetes Gelenkteil (78f) sitzt (Fig. 8).

17. Bearbeitungsmaschine nach Anspruch 16,
dadurch gekennzeichnet, daß mit Abstand voneinander liegende Stellantriebe (9f, 10f) mit jeweils einem Kreuzgelenk (65f) mit dem Träger (14f) antriebsverbunden sind.

18. Bearbeitungsmaschine nach Anspruch 16 oder 17,
dadurch gekennzeichnet, daß ein dritter Stellantrieb (8f) im Winkelabstand zu den beiden anderen Stellantrieben (9f, 10f) vorgesehen ist, der einen Stellschieber (36) aufweist, der mit dem Träger (14f) gelenkig verbunden und in einem schwenkbar am Ständer (4f) gelagerten Gehäuse verschiebbar ist.

19. Bearbeitungsmaschine mit einem Ständer (4g), an dem ein Träger (14g) verstellbar gelagert ist, der einen Schneidelemente aufweisenden Werkzeugträger (19g) aufweist, der während der Verstellung des Trägers (14g) um seine Achse drehbar angetrieben ist, an dem mindestens ein Stellantrieb (8g bis 10g) angreift, der zur Erzeugung der Verstellbewegung des Trägers (14g) an eine Steuerung angeschlossen ist, mit der der Stellantrieb (8g bis 10g) antreibbar ist, der schwenkbar am Ständer (4g) gelagert ist,
dadurch gekennzeichnet, daß der Stellantrieb (8g bis 10g) am Ständer (4g) befestigt ist und eine drehbar angetriebene Spindel (85 bis 87) aufweist, auf der ein Führungselement (82 bis 84) sitzt, das gelenkig mit dem Träger (14g) verbunden ist (Fig. 10 und 11).

20. Bearbeitungsmaschine nach Anspruch 19,
dadurch gekennzeichnet, daß das Führungselement (82 bis 84) in einer Führungsöffnung (79 bis 81) des Ständers (4g) verschiebbar ist und vorzugsweise einen senkrecht zur Spindelachse vorstehenden und vorteilhaft parallel zur Verschieberichtung des Ständers (4g) liegenden Zapfen (88 bis 90) aufweist, der über eine Schwenklasche (91 bis 93) mit parallel zu den Zapfen (88 bis 90) liegenden weiteren Zapfen (94 bis 96) des Trägers (14g) verbunden ist.

21. Bearbeitungsmaschine nach Anspruch 19 oder 20,
dadurch gekennzeichnet, daß drei in Winkelabständen zueinander angeordnete Stellantriebe (8g bis 10g) vorgesehen sind, die vorteilhaft an die Steuerung angeschlossen sind.

## Claims

1. A processing machine with a stand (4, 4a, 4b, 4d), on which a support (14, 14a, 14b) is displaceably mounted which has a tool support (19, 19a) provided with cutting elements and driven rotatably about its axis during the displacement of the support (14, 14a, 14b), on which at least one actuating drive (8 to 10; 8a, 9a; 9b, 10b) engages which, in order to produce the displacement movement of the support (14, 14a, 14b), is connected to a control means by which the actuating drive (8 to 10; 8a, 9a; 9b, 10b) can be driven which is mounted pivotably on the stand (4, 4a, 4b, 4d), **characterized in that** the actuating drive (8 to 10; 8a, 9a; 9b, 10b) is mounted on the stand (4, 4a, 4b, 4d) and on the support (14, 14a, 14b) so as to be pivotable about mutually parallel axes (11 to 13, 15 to 17) which extend in the axial direction of the tool support (19, 19a) (Figs. 1 to 4 and 6).

2. A processing machine according to Claim 1, **characterized in that** two actuating drives (9b, 10b) arranged at an angular distance from each other engage on the support (14b).

3. A processing machine according to Claim 1, **characterized in that** three actuating drives (8 to 10) arranged at an angular distance from one another engage on the support (14).

4. A processing machine according to Claim 2 or 3, **characterized in that** all the actuating drives (8 to 10; 8a, 9a; 9b, 10b) are mounted on the stand (4, 4a, 4b, 4d) and on the support (14, 14a, 14b) so as to be pivotable about mutually parallel axes (11 to 13, 15 to 17).

5. A processing machine according to one of Claims 1 to 4, **characterized in that** the actuating drives (8 to 10; 8a, 9a) each have a respective displacement slide (36) which is mounted displaceably in a housing (28, 28a) and is preferably articulated with its free end to the support (14, 14a) or to the stand (4, 4a).

6. A processing machine according to Claim 5, **characterized in that** the displacement slide (36) is displaceable by a spindle drive (34, 35).

7. A processing machine according to one of Claims 1 to 6, **characterized in that** the actuating drives (8 to 10; 8a, 9a) each have a respective housing (28, 28a) which is articulated to the stand (4, 4a) or to the support (14, 14a) and preferably has a bearing journal (29; 29a, 50) which projects transversely and which is mounted rotatably in a bearing receptacle (30; 30a, 56) of the stand (4, 4a) or the support (14, 14a).

8. A processing machine according to Claim 7, **characterized in that** the bearing journal (29a, 50) is mounted so as to be displaceable in its longitudinal axis, and the displacement movement of all the bearing journals (29a, 50) is preferably derived from a common displacement drive (47).

9. A processing machine according to Claim 8, **characterized in that** the displacement drive (47) drives the bearing journal (29a) of one actuating drive (8a) by way of a spindle drive (48, 49) in an axially displaceable manner, and one threaded spindle (48) of the spindle drive (48, 49) is advantageously connected in a driving manner to spindle drives (52, 53) of the bearing journals (50) of the other actuating drives (9a) by way of a transmission (58), preferably a toothed-belt drive.

10. A processing machine according to one of Claims 1 to 9, **characterized in that** the tool support (19, 19a) can be driven by a rotary drive (25) arranged on the support (14, 14a).

11. A processing machine with a stand (4c), on which a support (14c) is displaceably mounted which has a tool support (19c) provided with cutting elements and driven rotatably about its axis during the displacement of the support (14c), on which at least one actuating drive (9c) engages which, in order to produce the displacement movement of the support (14c), is connected to a control means by which the actuating drive (9c) can be driven which is mounted pivotably on the stand (4c), **characterized in that** the actuating drive (9c) is mounted displaceably on the stand (4c), the support (14c) is firmly connected to the actuating drive (9c) in the displacement direction, and the actuating drive (9c) together with the support (14c) is advantageously mounted on the stand (4c) so as to be pivotable about an axis (12) extending in the axial direction of the tool support (19c) (Fig. 5).

12. A processing machine according to Claim 11, **characterized in that** the housing (28c) of the actuating drive (9c) is provided with a set of teeth (76) into which a toothed wheel (77) of a pivot drive engages which together with the actuating drive (9c) is preferably displaceable and pivotable.

13. A processing machine with a stand (4e), on which a support (14e) is displaceably mounted which has a tool support (19e) provided with cutting elements and driven rotatably about its axis during the displacement of the support (14e), on which at least one actuating drive (8e, 9e) engages which, in order to produce the displacement movement of the support (14e), is connected to a control means by which the actuating drive (8e, 9e) can be driven which is mounted pivotably on the stand (4e), **characterized in that** the support (14e) is connected to the stand (4e) by a universal joint (65) which preferably comprises two parts (68, 69), of which one joint part (68) is connected to the stand (4e) and the other joint part (69) is connected to the support (14e) (Figs. 7 and 9).

14. A processing machine according to Claim 13, **characterized in that** the universal joint (65) is displaceable in two directions arranged at an angle, preferably a right angle, to each other, and the two joint parts (68, 69) are preferably rotatable relative to each other.

15. A processing machine according to Claim 14, **characterized in that** the rotational axis (73) is situated parallel to the pivot axes (11, 12; 15, 16) of the actuating drives (8e, 9e), and the rotational axis (73) and the pivot axes (11, 12; 15, 16) are situated at an angular distance from one another of approximately 120°.

16. A processing machine with a stand (4f), on which a support (14f) is displaceably mounted which has a tool support (19f) provided with cutting elements and driven rotatably about its axis during the displacement of the support (14f), on which at least one actuating drive (8f to 10f) engages which, in order to produce the displacement movement of the support (14f), is connected to a control means by which the actuating drive (8f to 10f) can be driven which is mounted pivotably on the stand (4f), **characterized in that** the actuating drive (9f, 10f) is connected in a driving manner by a universal joint (65f) and has a threaded spindle (75) on which a joint part (78f) constructed in the form of a spindle nut is mounted (Fig. 8).

17. A processing machine according to Claim 16, **characterized in that** actuating drives (9f, 10f) arranged at a distance from each other are each connected in a driving manner to the support (14f) by a respective universal joint (65f).

18. A processing machine according to Claim 16 or 17, **characterized in that** a third actuating drive (8f) is provided at an angular distance from the two other actuating drives (9f, 10f) and has a displacement slide (36) which is connected to the support (14f) in an articulated manner and is displaceable in a housing mounted pivotably on the stand (4f).

19. A processing machine with a stand (4g), on which a support (14g) is displaceably mounted which has a tool support (19g) provided with cutting elements and driven rotatably about its axis during the displacement of the support (14g), on which at least one actuating drive (8g to 10g) engages which, in order to produce the displacement movement of the support (14g), is connected to a control means by which the actuating drive (8g to 10g) can be driven which is mounted pivotably on the stand (4g), **characterized in** **that** the actuating drive (8g to 10g) is fastened to the stand (4g) and has a rotatably driven spindle (85 to 87) on which a guide element (82 to 84) is mounted which is connected to the support (14g) in an articulated manner (Figs. 10 and 11).

20. A processing machine according to Claim 19, **characterized in that** the guide element (82 to 84) is displaceable in a guide opening (79 to 81) in the stand (4g) and is preferably provided with a pin (88 to 90) which projects at a right angle to the axis of the spindle and is advantageously situated parallel to the displacement direction of the stand (4g) and which is connected by way of a pivoting plate (91 to 93) to further pins (94 to 96) of the support (14g) arranged parallel to the pins (88 to 90).

21. A processing machine according to Claim 19 or 20, **characterized in that** three actuating drives (8g to 10g) arranged at angular distances from one another are provided which are advantageously connected to the control means.

## Revendications

1. Machine d'usinage comprenant un châssis (4, 4a, 4b, 4d) sur lequel un support (14, 14a, 14b) est monté avec faculté de réglage, ledit support comprenant un porte-outil (19, 19a) qui présente des éléments de coupe et qui pendant le déplacement du support (14, 14a, 14b) est entraîné en rotation autour de son axe, lequel est attaqué par au moins un servomoteur (8 à 10 ; 8a, 9a ; 9b, 10b) qui est raccordé à une commande afin de produire le mouvement de réglage du support (14, 14a, 14b), et le servomoteur (8 à 10 ; 8a, 9a ; 9b, 10b), monté en pivotement sur le châssis (4, 4a, 4b, 4d), est susceptible d'être entraîné au moyen de ladite commande,
caractérisée en ce que le servomoteur (8 à 10 ; 8a, 9a ; 9b, 10b) est monté en pivotement sur le châssis (4, 4a, 4b, 4d) et sur le support (14, 14a, 14b) autour d'axes mutuellement parallèles (11 à 13, 15 à 17) qui s'étendent dans la direction axiale du porte-outil (19, 19a) (figures 1 à 4 et 6).

2. Machine d'usinage selon la revendication 1,
caractérisée en ce qu'il est prévu deux servomoteurs (9b, 10b), agencés à écartement angulaire l'un de l'autre, qui attaquent le support (14b).

3. Machine d'usinage selon la revendication 1,
caractérisée en ce qu'il est prévu trois servomoteurs (8 à 10), agencés à écartement angulaire les uns des autres, qui attaquent le support (14).

4. Machine d'usinage selon l'une ou l'autre des revendications 2 et 3,
caractérisée en ce que tous les servomoteurs (8 à 10 ; 8a, 9a ; 9b, 10b) sont montés sur le châssis (4, 4a, 4b, 4d) et sur le support (14, 14a, 14b, 14d) en pivotement autour d'axes mutuellement parallèles (11 à 13, 15 à 17).

5. Machine d'usinage selon l'une des revendications 1 à 4,
caractérisée en ce que les servomoteurs (8 à 10, 8a, 9a) présentent chacun un coulisseau de positionnement (36), monté en translation dans un boîtier (28, 28a) et de préférence articulé par son extrémité libre sur le châssis (14, 14a) ou sur le support (4, 4a).

6. Machine d'usinage selon la revendication 5,
caractérisée en ce que le coulisseau de positionnement (36) est déplacé en translation par un entraînement à broche (34, 35).

7. Machine d'usinage selon l'une des revendications 1 à 6,
caractérisée en ce que les servomoteurs (8 à 10 ; 8a, 9a) possèdent chacun un boîtier (28, 28a), qui est articulé sur le châssis (4, 4a) ou sur le support (14, 14a) et présente de préférence un tourillon de montage (29 ; 29a, 50), qui dépasse transversalement et qui est monté en rotation dans un logement de montage (30 ; 30a, 56) du châssis (4, 4a) ou du support (14, 14a).

8. Machine d'usinage selon la revendication 7,
caractérisée en ce que le tourillon de montage (29a, 50) est monté en translation suivant son axe longitudinal, et en ce que de préférence le mouvement de translation de la totalité des tourillons de montage (29a, 50) est dérivé d'un entraînement de translation commun (47).

9. Machine d'usinage selon la revendication 8,
caractérisée en ce que l'entraînement de translation (47) entraîne en translation axiale le tourillon de montage (29a) de l'un des servomoteurs (8a) au moyen d'un entraînement à broche (48, 49), et en ce qu'une broche filetée (48) de l'entraînement à broche (48, 49) est reliée de préférence en termes d'entraînement, via une transmission (58) et de préférence une transmission à courroie dentée, avec des entraînements à broche (52, 53) des tourillons de montage (50) des autres servomoteurs (9a).

10. Machine d'usinage selon l'une des revendications 1 à 9,
caractérisée en ce que le porte-outil (19, 19a) et susceptible d'être entraîné par un entraînement tournant (25) agencé sur le support (14, 14a).

11. Machine d'usinage, comprenant un châssis (4c), sur lequel est monté un support (14c) avec faculté de réglage, lequel présente un porte-outil (19c) qui présente des éléments de coupe et qui pendant le déplacement du support (14c) est entraîné en rotation autour de son axe, lequel est attaqué par au moins un servomoteur (9c) qui est raccordé à une commande afin de produire le mouvement de réglage du support (14c), et le servomoteur (9c), monté en pivotement sur le châssis (4c), est susceptible d'être entraîné au moyen de ladite commande,
caractérisée en ce que le servomoteur (9c) est monté avec faculté de translation sur le châssis (4c), en ce que le support (14c) est fermement relié au servomoteur (9c) dans la direction de translation, et en ce que le servomoteur (9c), conjointement avec le support (14c), est avantageusement monté en pivotement sur le châssis (4c) autour d'un axe (12) qui s'étend dans la direction axiale du porte-outil (19c) (figure 5).

12. Machine d'usinage selon la revendication 11,
caractérisée en ce que le boîtier (28c) du servomoteur (9c) est pourvu d'une denture (76) dans laquelle engrène une roue dentée (77) d'un entraînement de pivotement, lequel est de préférence capable de se déplacer en translation et en rotation conjointement avec le servomoteur (9c).

13. Machine d'usinage, comprenant un châssis (4e), sur lequel est monté un support (14e) avec faculté de réglage, lequel présente un porte-outil (19e) qui présente des éléments de coupe et qui pendant le déplacement du support (14e) est entraîné en rotation autour de son axe, lequel est attaqué par au moins un servomoteur (8e, 9e) qui est raccordé à une commande afin de produire le mouvement de réglage du support (14e), et le servomoteur (8e, 9e), monté en pivotement sur le châssis (4e), est susceptible d'être entraîné au moyen de ladite commande,
caractérisée en ce que le support (14e) est relié au châssis (4e) au moyen d'un joint à croisillon (65), lequel comprend de préférence deux parties de joint (68, 69) parmi lesquelles une partie de joint (68) est reliée au châssis (4e) et l'autre partie de joint (69) est reliée au support (14e) (figures 7 et 9).

14. Machine d'usinage selon la revendication 13,
caractérisée en ce que le joint à croisillon (65) est susceptible d'être déplacé dans deux directions disposées sous un angle et de préférence sous un angle droit l'une par rapport à l'autre, et en ce que les deux parties de joint (68, 69) sont de préférence susceptibles de tourner l'une par rapport à l'autre.

15. Machine d'usinage selon la revendication 14,
caractérisée en ce que l'axe de rotation (73) est disposé parallèlement aux axe de pivotement (11, 12 ; 15, 16) des servomoteurs (8e, 9e), et en ce que l'axe de rotation (73) et les axes de pivotement (11, 12 ; 15, 16) sont situés de préférence à un écartement angulaire de 120° environ les uns par rapport aux autres.

16. Machine d'usinage, comprenant un châssis (4f), sur lequel est monté un support (14f) avec faculté de réglage, lequel présente un porte-outil (19f) qui présente des éléments de coupe et qui pendant le déplacement du support (14f) est entraîné en rotation autour de son axe, lequel est attaqué par au moins un servomoteur (8f à 10f) qui est raccordé à une commande afin de produire le mouvement de réglage du support (14f), et le servomoteur (8f à 10f), monté en pivotement sur le châssis (4f), est susceptible d'être entraîné au moyen de ladite commande,
caractérisée en ce que le servomoteur (9f, 10f) est relié en termes d'entraînement à un joint à croisillon (65f) et possède une broche filetée (75) sur laquelle repose une partie de joint (78f) réalisée sous forme d'écrou à broche (figure 8).

17. Machine d'usinage selon la revendication 16,
caractérisée en ce que des servomoteurs (9f, 10f) disposés à distance les uns des autres sont reliés en termes d'entraînement au support (14f) avec un joint à croisillon respectif (65f).

18. Machine d'usinage selon l'une ou l'autre des revendications 16 et 17,
caractérisée en ce qu'il est prévu un troisième servomoteur (8f) à distance angulaire des deux autres servomoteurs (9f, 10f), lequel présente un coulisseau de positionnement (36) qui est relié en articulation au support (14f) et susceptible d'être déplacé dans un boîtier monté en pivotement sur le châssis (4f).

19. Machine d'usinage, comprenant un châssis (4g), sur lequel est monté un support (14g) avec faculté de réglage, lequel présente un porte-outil (19g) qui présente des éléments de coupe et qui pendant le déplacement du support (14g) est entraîné en rotation autour de son axe, lequel est attaqué par au moins un servomoteur (8g à 10g) qui est raccordé à une commande afin de produire le mouvement de réglage du support (14g), et le servomoteur (8g à 10g), monté en pivotement sur le châssis (4g), est susceptible d'être entraîné au moyen de ladite commande,
caractérisée en ce que le servomoteur (8g à 10g) est fixé sur le châssis (4g) et présente une broche (85 à 87) entraînée en rotation, sur laquelle repose un élément de guidage (82 à 84) relié de façon articulée au support (14g) (figures 10 et 11).

20. Machine d'usinage selon la revendication 19,
caractérisée en ce que l'élément de guidage (82 à 84) est susceptible de se déplacer dans une ouverture de guidage (79 à 81) du châssis (4g) et présente de préférence un tourillon (88 à 90) qui dépasse perpendiculairement à l'axe de broche et qui est situé avantageusement parallèlement à la direction de déplacement du châssis (4g), ledit tourillon étant relié, par l'intermédiaire d'une patte de pivotement (91 à 93), à d'autres tourillons (94 à 96) du support (14g) disposés parallèlement audit tourillon (88 à 90).

21. Machine d'usinage selon l'une ou l'autre des revendications 19 et 20,
caractérisée en ce qu'il est prévu trois servomoteurs (8g à 10g) agencés à des écarts angulaires les uns par rapport aux autres, et qui sont avantageusement raccordés à la commande.
